(19) Europäisches Patentamt
European Patent Office
Office européen des brevets

(11) EP 3 945 112 B1

(12) EUROPEAN PATENT SPECIFICATION

(45) Date of publication and mention of the grant of the patent:
**22.01.2025 Bulletin 2025/04**

(21) Application number: **20188952.4**

(22) Date of filing: **31.07.2020**

(51) International Patent Classification (IPC):
***C08L 23/12*** $^{(2006.01)}$

(52) Cooperative Patent Classification (CPC):
(C-Sets available)
**C08L 23/12;** C08L 2205/025; C08L 2207/10; C08L 2314/02 (Cont.)

(54) **MULTIMODAL POLYPROPYLENE COMPOSITION WITH HIGH STIFFNESS AND HIGH FLOWABILITY AND PROCESS FOR ITS PRODUCTION**

MULTIMODALE POLYPROPYLENZUSAMMENSETZUNG MIT HOHER STEIFIGKEIT UND HOHER FLIESSFÄHIGKEIT UND VERFAHREN ZU IHRER HERSTELLUNG

COMPOSITION DE POLYPROPYLÈNE MULTIMODAL PRÉSENTANT UNE RIGIDITÉ ET UNE FLUIDITÉ ÉLEVÉES ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.02.2022 Bulletin 2022/05**

(73) Proprietor: **Borealis AG**
**1020 Vienna (AT)**

(72) Inventors:
- **Tranninger, Cornelia Anita**
  **4021 Linz (AT)**
- **Lummerstorfer, Thomas**
  **4021 Linz (AT)**
- **Horill, Thomas**
  **2320 Schwechat-Mannswörth (AT)**
- **Gahleitner, Markus**
  **4021 Linz (AT)**
- **Wang, Jingbo**
  **4021 Linz (AT)**
- **Bernreitner, Klaus**
  **4021 Linz (AT)**
- **Berger, Friedrich**
  **4021 Linz (AT)**
- **Leskinen, Pauli**
  **06101 Porvoo (FI)**

(74) Representative: **Kador & Partner Part mbB**
**Corneliusstraße 15**
**80469 München (DE)**

(56) References cited:
**EP-A1- 1 726 602**
**EP-A1- 2 514 770**
**EP-A1- 3 184 587**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/12, C08L 23/12;**
**C08L 23/12, C08L 23/12, C08L 23/12**

## Description

### Background art

The present invention relates to a multimodal polypropylene composition, a process for its production, articles comprising the composition and its use for the production of molded articles, preferably injection molded articles.

The need for polypropylene homopolymers with excellent stiffness at high flowability is constantly increasing as down-gauging and light-weighing become more important with the need for saving energy resources. High flowability polypropylenes are typically used in moulding and particularly the automotive business where injection moulding is the preferred conversion-process. Especially for glass fibre applications high flow homopolymer with good mechanical properties and high thermal stability is required. Additionally, the addition of high flow homopolymers with excellent impact stiffness balance allows increasing the MFR of automotive compounds without losing the needed mechanical performance.

The production of high MFR polypropylene homopolymers may be achieved by controlling the reaction conditions such that a fraction of molecules having relatively short chains is obtained. However, increasing the fraction of molecules having relatively short chains is detrimental to impact strength. Another problem makes a solution even more complex. Higher stiffness of polypropylene is conventionally accompanied by higher shrinkage. Shrinkage, being a measure for three-dimensional stability in moulding, is related with the applicability for moulding applications.

From a process perspective, the provision of polypropylene having a very high flowability and simultaneously high stiffness is challenging. Increasing the hydrogen concentration in the polymerization reactor can result in considerably high amount of amorphous material limiting crystallinity and insofar stiffness. A known concept of overcoming these limitations is the use of external donors. External donors increase the hydrogen response and can significantly increase the production rate to crystalline material. However, donors resulting in a better hydrogen response yield materials with lower isotacticity, and insofar lower stiffness.

From a general perspective, stiffness is mainly influenced by the crystal structure which is mainly influenced by chain regularity and further by molecular weight. The crystal structure is i.a. reflected by the lamella thickness being directly measurable by stepwise isothermal segregation technique (SIST). Stepwise isothermal segregation technique (SIST) is a stepwise fractioning by crystallization when cooling the molten sample.

EP 2 514 770 A1 discloses a polypropylene composition comprising a polypropylene base resin, the polypropylene base resin having lamellas of a thickness from 24.2 nm to 84.6 nm in an amount of at least 40% when measured by stepwise isothermal segregation technique (SIST); a molecular weight distribution broadness Mw/Mn, as calculated from gel permeation chromatography, of at least 5, the polypropylene composition having an $MFR_2$ measured according to ISO 1133 (230 °C, 2.16 kg load) of at least 50 g/10 min ; and a tensile modulus of 2000 MPa or higher when measured according to ISO 527-2 using injection moulded test specimens as described in EN ISO 1873-2 (dog bone shape, 4 mm thickness). This prior art further discloses that the negative side effects of the use of external donors yielding higher hydrogen response can be overcome by incorporating a relatively high amount of high molecular weight material having a comparatively moderate molecular weight.

WO 2016/102430 A1 discloses a process for producing polypropylene having a high melt flow rate by use of a specific Ziegler-Natta catalyst comprising an external electron donor which is a silane compound. The process yields propylene polymers which can be produced at a lower amount of hydrogen in the reactor leading to shorter transition times.

EP 2 960 279 A1 discloses a nucleated polypropylene composition and articles produced thereof which fulfil higher stiffness-impact-requirements and also health and environmental requirements. The nucleated polypropylene composition comprises a) at least one propylene homopolymer and b) a polymeric nucleating agent wherein said nucleated polypropylene composition is characterized by having a sum of [G' (measured by Dynamic Mechanical Analysis according to ISO 6721-7) + Flexural Modulus (determined according to ISO178)], of at least 2040 MPa.

EP 3 184 449 A1 discloses injection molded articles comprising a polypropylene homopolymer with rather high melt flow rate, high stiffness, improved optical properties and an advantageous balance between stiffness and optical properties. The polypropylene homopolymer comprises (a) a small amount of ethylene and/or a $C_4$-$C_{10}$ alpha-olefin (b) at least one alpha-nucleating agent, (c) is free of phthalic acid esters as well as their respective decomposition products, (d) has a $MFR_{230/2.16}$ in the range of 20 - 200 g/10 min, and (e) has a haze of lower than 45 %, when measured according to ASTM D1003 on 1mm plaques. The polypropylene homopolymer may be produced by a phthalate-free Ziegler-Natta catalyst.

The present invention has now found that polypropylene compositions can be obtained with excellent stiffness, high flowability and balanced mechanical performance by combining a specific non-phthalate catalyst system with an optimum polymer design.

It was surprisingly found that the polypropylene compositions of the present invention may further have a relatively low melt flow rate (relatively high molecular weight) which translates into even higher stiffness (increased isotacticity) and a well defined molecular weight distribution providing good mechanical performance, in particular

improved stiffness/impact balance. Moreover, low XCS contents enable advanced applications in the medical and environmental fields.

**Summary of the Invention**

Thus, the present invention provides a multimodal polypropylene composition comprising:

(A) a first propylene polymer fraction (PP1), and

(B) a second propylene polymer fraction (PP2),

wherein the first propylene polymer fraction (PP1) and the second propylene polymer fraction (PP2) have different weight average molecular weights, and

the multimodal polypropylene composition has:

(i) a melt flow rate $MFR_2$ (230°C, 2.16kg, ISO 1133) of from 1 to 500 g/10 min.,

(ii) a molecular weight distribution (Mw/Mn), determined by gel permeation chromatography according to ISO 16014-1:2003 and ISO 16014-4:2003, of at least 6.0 and not more than 20.0,

(iii) an isotacticity index (mmmm pentads) of at least 97 %, measured by $^{13}C$-NMR, as described herein,

(iv) a xylene soluble fraction (XCS), determined according to ISO 16152; first edition, 2005-07-01 at 25 °C of less than 3.5 wt.%, and

(v) an amount of 20 to 35 % of lamella thicknesses within a range of 24.16 to 84.55 nm with respect to the whole lamella thickness range, as obtained by stepwise isothermal segregation technique (SIST), as described herein and calculating the lamella thickness distribution according to the following equation:

$$T_m = T_0\left(1 - \frac{2\sigma}{\Delta H_0 \cdot L}\right)$$

where $T_0$=457 K, $\Delta H_0$ =134×106 J/m$^3$, $\sigma$ =0,049.6 J/m$^2$ and L is the lamella thickness in nm.

The multimodal polypropylene composition according to the present invention can be obtained by a multistage polymerization process in the presence of a Ziegler-Natta catalyst (ZN-C) comprising

a) compounds (TC) of a transition metal of Group 4 to 6 of the IUPAC Periodic Table of Elements, a Group 2 metal compound (MC) and an internal donor (ID), wherein said internal donor (ID) is a non-phthalic compound,

b) a co-catalyst (Co), and

c) optionally an external donor (ED).

Preferably, the internal donor (ID) is selected from the group consisting of optionally substituted malonates, maleates, succinates, glutarates, benzoates and derivatives and/or mixtures thereof, preferably from citraconates.

The present invention further relates to the use of the above multimodal polypropylene composition for the production of molded articles, preferably injection molded articles.

The present invention further relates to articles comprising the above multimodal polypropylene composition, preferably automotive articles or glass fiber articles. The composition is also suitable for pipes or film applications as well as packaging materials, where increased stiffness is desired.

"Polypropylene composition" denotes a composition consisting of at least 97.0 wt.-% polypropylene base resin and up to 3.0 wt.-% additives. The polypropylene may be a homo- or copolymer. A homopolymer in the sense of this disclosure refers to a propylene polymer preferably containing not more than 1 wt.% of comonomer selected from the group of ethylene and/or alpha-olefins having 4 to 10 carbon atoms. More preferably, such propylene polymers will contain

less than 0.8 wt.% or less than 0.5 wt.% of comonomers, The propylene polymer may also be free of comonomers. Preferably, the additives are selected from antioxidants, acid scavengers, UV stabilizers, alpha-nucleating agents, slip agents, antistatic agents, talcum and combinations thereof.

According to preferred embodiments, the polypropylene composition may comprise a polymeric or non-polymeric nucleating agent, preferably an alpha-nucleating agent.

The "modality" of a polymer refers to the form of its molecular weight distribution curve, i.e. the appearance of the graph of the polymer weight fraction as function of its molecular weight. If the polymer is produced in a sequential step process, utilizing reactors coupled in series and using different conditions in each reactor, the different fractions produced in the different reactors will each have their own molecular weight distribution. When the molecular weight distribution curves from these fractions are superimposed into the molecular weight distribution curve for the total resulting polymer product, that curve will show two or more maxima or at least be distinctly broadened in comparison with the curves for the individual fractions. Such a polymer product, produced in two or more serial steps, is called bimodal or multimodal depending on the number of steps. In the following all polymers thus produced in two or more sequential steps are called "multimodal". It is noted that also the chemical compositions of the different fractions may be different.

The amount of a certain lamella thickness range in percent is the relative percentage of the lamella thicknesses within this range with respect to all lamella thicknesses within the sample.

"Catalyst system" denotes the combination of the catalyst and the co-catalyst.

"Reaction zone" is a locally delimited zone where the reaction takes place. Usually each reaction zone will be formed by one reactor.

Increasing the temperature resistance shall mean an increase as to the temperature resistance either over a base material or, when the inventive polypropylene composition substitutes another composition.

**Detailed Description of the Invention**

It has been surprisingly found that a multimodal polypropylene composition can be achieved with high to moderate flowability, high stiffness and balanced mechanical performance using a non-phthalate catalyst in the polymerization process. The polymer properties can be obtained by a particular multimodal, preferably bimodal or trimodal matrix of the composition. By a particular multimodal polypropylene matrix, the stiffness of the material is boosted by the presence of a high molecular weight fraction, while maintaining high to moderate flowability by incorporating a low molecular weight fraction in the same material. In the present invention, multimodal polypropylene compositions with varying final molecular weights can be obtained to modulate flowability for different technical applications. The significantly better flowabiltiy enables the use of the polypropylene compositions in molding applications, particularly injection molding applications. The excellent flowability is further accompanied by high stiffness. High stiffness is important for numerous polypropylene uses.

Thus, the melt flow rate $MFR_2$ (230°C, 2.16kg, ISO 1133) of the multimodal polypropylene composition according to the present invention may range from 1 to 500 g/10 min., preferably from 1 to 350 g/10 min., more preferably from 1 to 275 g/10 min. In preferred embodiments of the present invention the melt flow rate $MFR_2$ (230°C, 2.16kg, ISO 1133) of the multimodal polypropylene composition may range from 1 to 10 g/10 min., preferably 1 to 5 g/10 min. In other preferred embodiments of the present invention the melt flow rate $MFR_2$ (230°C, 2.16kg, ISO 1133) of the multimodal polypropylene composition may range from 100 to 500 g/10 min., preferably 150 to 400 g/10 min., more preferably from 175 to 350 g/10 min.

The polypropylene composition in accordance with the present invention is multimodal including bi- and trimodal with respect to molecular weight distribution concerning the propylene polymer components. In accordance with the present invention, the polypropylene composition comprises at least two different propylene polymer fractions, differing with respect to the melt flow rate ($MFR_2$). Thus, the multimodal polypropylene composition according to the present invention comprises:

(A) a first propylene polymer fraction (PP1), and

(B) a second propylene polymer fraction (PP2),

wherein the first propylene polymer fraction (PP1) and the second propylene polymer fraction (PP2) have different weight average molecular weights.

Preferably, the first propylene polymer fraction (PP1) and the second propylene polymer fraction (PP2) are homopolymers.

According to a preferred embodiment of the present invention, the first propylene polymer fraction (PP1) has a melt flow rate $MFR_2$ (230°C, 2.16kg, ISO 1133-1) of at least 350 g/10 min., more preferably at least 360 g/10 min., even more preferably at least 370 g/10 min., and the second propylene polymer fraction (PP2) has a melt flow rate $MFR_2$ (230°C,

2.16kg, ISO 1133) lower than the melt flow rate of the first propylene polymer fraction (PP1). Each of the above $MFR_2$ ranges for the first propylene polymer fraction (PP1) may preferably combined with a second propylene polymer fraction (PP2) having a melt flow rate $MFR_2$ (230°C, 2.16kg, ISO 1133) of not more than 50 g/10 min., more preferably not more than 30 g/10 min., even more preferably not more than 20 g/10 min.

Preferably, the multimodal polypropylene composition of the present invention may comprise an intermediate, compatibilising fraction. Such a third propylene polymer fraction (PP3) may preferably have a melt flow rate $MFR_2$ (230°C, 2.16kg, ISO 1133) which is lower than the melt flow rate $MFR_2$ (230°C, 2.16kg, ISO 1133) of the first propylene polymer fraction (PP1) and higher than the melt flow rate $MFR_2$ (230°C, 2.16kg, ISO 1133) of the second propylene polymer fraction (PP2). Each of the above $MFR_2$ ranges for the first (PP1) and second propylene polymer fraction (PP2) may preferably combined with a third propylene polymer fraction (PP3) preferably having a melt flow rate $MFR_2$ (230°C, 2.16kg, ISO 1133) of at least 100 g/10 min., more preferably at least 150 g/ 10 min., even more preferably at least 250 g/10 min.

In a particularly preferred embodiment of the present invention, the multimodal polypropylene composition has a trimodal design.

Without being bound to theory, it is considered that the beneficial effect of the high molecular weight part is based on the orientation of the long chains in the polypropylene composition leading to higher stiffness through flow-induced crystallization as well as on an increase in the nucleation density of the material. The intermediate fraction can be added in order to facilitate a homogenous distribution of the two other fractions, which differ strongly in flowability and thus viscosity.

The polypropylene composition according to the present invention preferably has a melting temperature of at least 160 °C, more preferably at least 162 °C and even more preferably at least 164 °C, all melting temperatures being measured by DSC analysis.

The polypropylene composition according to the present invention has a xylene soluble content XCS (ISO 16152; first edition, 2005-07-01 at 25 °C) of less than 3.5 wt.%., preferably 3.0 wt.-% or lower and more preferably 2.9 wt.-% or lower.

The multimodal polypropylene composition according to the present invention is further characterized by an isotacticity index (mmmm pentads) of at least 97 %, measured by $^{13}C$-NMR, as described below in the experimental part, preferably at least 97.2 % and more preferably at least 97.5 %.

The multimodal polypropylene composition according to the present invention is further characterized by an amount of 20 to 35 % of lamella thicknesses within a range of 24.16 to 84.55 nm with respect to the whole lamella thickness range, as obtained by stepwise isothermal segregation technique (SIST), as described herein and calculating the lamella thickness distribution according to the following equation:

$$T_m = T_0\left(1 - \frac{2\sigma}{\Delta H_0 \cdot L}\right)$$

where $T_0$=457 K, $\Delta H_0$ =134×106 J/m$^3$, $\sigma$ =0,049.6 J/m$^2$ and L is the lamella thickness in nm.

The multimodal polypropylene composition according to the present invention preferably has a crystallization temperature $T_{CR}$ as measured by DSC, determined as described in the experimental section, of 125 °C or higher. When the crystallinity of the polypropylene is not sufficient, the stiffness will be undesirably low.

The multimodal polypropylene composition according to the present invention has a molecular weight distribution (Mw/Mn), determined by gel permeation chromatography (ISO 16014-1:2003 and ISO 16014-4:2003) of at least 6.0 and not more than 20.0. In preferred embodiments of the present invention, the molecular weight distribution (Mw/Mn) may preferably range from 6.0 to 10.0, more preferably 6.5 to 8.0. In other preferred embodiments of the present invention, the molecular weight distribution (Mw/Mn) may preferably range from 7.0 to 15.0, more preferably from 8.0 to 14.0, even more preferably from 8.0 to 13.0. The molecular weight distribution broadness reflects the broadness of the molecular weight distribution.

Moreover, the multimodal polypropylene composition according to the present invention preferably has a weight average molecular weight $M_w$ of the polypropylene of 500 000 g/mol or lower, determined by GPC according to ISO 16014-4 2003. Usually the weight average molecular weight $M_w$ of the polypropylene base resin will be 40 000 g/mol or higher. In preferred embodiments of the present invention, the weight average molecular weight $M_w$ of the polypropylene may preferably be 450 000 g/mol or lower, more preferably 420 000 g/mol or lower. In these embodiments, the weight average molecular weight $M_w$ of the polypropylene may preferably be 350.000 g/mol or higher. In other preferred embodiments of the present invention, the weight average molecular weight $M_w$ of the polypropylene may preferably be 150 000 g/mol or lower, more preferably 130 000 g/mol or lower, even more preferably 120 000 g/mol or lower.

Preferably, the multimodal polypropylene composition according to the present invention has

(i) a melt flow rate $MFR_2$ (230°C, 2.16kg, ISO 1133) of at least 100 g/10 min., and/or

(ii) a flexural modulus, determined in a 3-point-bending according to ISO 178 on injection molded specimens of 80 × 10 × 4 mm, prepared at 200 °C or 230°C in accordance with EN ISO 19069-2, of at least 2000 MPa, and/or

(iii) an amount of at least 50 wt.% of the total polymer amount eluted by analytical temperature rising elution fractionation (aTREF), as described in the experimental section below, within a temperature range of from 115 to 129°C.

The multimodal polypropylene composition according to the present invention preferably has a flexural modulus, determined in a 3-point-bending according to ISO 178 on injection molded specimens of 80 × 10 × 4 mm, prepared at 200 °C or 230°C in accordance with EN ISO 19069-2, of at least 2000 MPa. In preferred embodiments of the present invention, the flexural modulus may preferably be at least 2050 MPa, more preferably at least 2100 MPa. In other preferred embodiments of the present invention, the flexural modulus may preferably be at least 2200 MPa, more preferably at least 2300 MPa.

The multimodal polypropylene composition according to the present invention is characterized by a desirable stiffness-impact balance. Thus, the composition preferably has a Charpy notched impact strength of at least 1.6 kJ/$m^2$, more preferably at least 1.7 kJ/$m^2$, even more preferably at least at least 1.8 kJ/$m^2$, determined according to ISO 179 1eA at +23 °C using injection molded specimens molded at 230°C, produced according to EN ISO 19069-2, as described in the experimental section below.

It should be understood that any of the lower or upper limits of any of the parameters described for the preferred embodiments of the present invention can be combined with each other. Likewise, any of the lower or upper limits of any of the parameters described for the "other preferred embodiments of the present invention" can be combined with each other.

The polypropylene composition of the present invention may be a homopolymer but may also be a copolymer.

Preferably, the multimodal polypropylene composition of the present invention is prepared by incorporation of an alpha-nucleating agent. Preferably, the alpha-nucleating agent may be selected from the group consisting of:

(i) salts of monocarboxylic acids and polycarboxylic acids, e.g. sodium benzoate or aluminum tert-butylbenzoate;

(ii) soluble nucleating agents, like sorbitol derivatives, e.g. di(alkylbenzylidene)-sorbitols as 1,3:2,4-25 dibenzylidene sorbitol, 1,3:2,4-di(4-methylbenzylidene) sorbitol, 1,3:2,4-di(4-ethylbenzylidene) sorbitol and 1,3:2,4-Bis(3,4-dimethylbenzylidene) sorbitol, as well as nonitol derivatives, e.g. 1,2,3-trideoxy-4,6:5,7-bis-O-[(4-propylphenyl)-methylene] nonitol, and benzenetrisamides like substituted 1,3,5-benzenetrisamides as N,N',N"-tris-tert-butyl-1,3,5-benzenetricarboxamide, N,N',N"-tris-cyclohexyl-1,3,5-benzene-tricarboxamide and N-[3,5-bis-(2,2-dimethyl-propionylamino)-phenyl]-2,2-dimethyl-propionamide, wherein 1,3:2,4-di(4-methylbenzylidene) sorbitol and N-[3,5-bis-(2,2-dimethyl-propionylamino)-phenyl]-2,2-dimethyl-propionamide are equally preferred,

(iii) salts of diesters of phosphoric acid, e.g. sodium 2,2'-methylenebis (4, 6,-di-tert-butylphenyl) phosphate or aluminum-hydroxy-bis[2,2"-methylene-bis(4,6-di-t-butylphenyl)phosphate], and hydroxybis-(2,4,8,10-tetra-tert-butyl-6-hydroxy-12H-dibenzo(d,g)-(1,3,2)-dioxaphosphocin-6-oxidato) aluminum, wherein hydroxybis-(2,4,8,10-tetra-tertbutyl-6-hydroxy-12H-dibenzo(d,9)-(1,3,2)-dioxaphosphocin-6-oxidato) aluminum is preferred; and

(iv) polymeric nucleating agents, such as polymerized vinyl compounds, in particular vinyl cycloalkanes, like vinyl cyclohexane (VCH), poly(vinyl cyclohexane) (PVCH), vinylcyclopentane, and vinyl-2-methyl cyclohexane, 3-methyl-1-butene, 3-ethyl-1-hexene, 3-methyl-1-pentene, 4-methyl-1-pentene or mixtures thereof. PVCH is particularly preferred.

Polymeric nucleating agents from group (iv) can either be incorporated by in-reactor nucleation (BNT technology) or by the so called masterbatch technology (compounding technology) as mentioned below.

In a preferred embodiment of the present invention, the polymeric nucleating agent is introduced into the multimodal polypropylene composition by means of a suitably modified catalyst, into the reactor (i.e. in-reactor nucleation or BNT technology) i.e. the catalyst to be used in catalyzing the polymerization of any of the fractions is subjected to a polymerization of a suitable monomer for the polymeric nucleating agent to produce said polymeric nucleating agent. The catalyst is then introduced together with the obtained polymeric nucleating agent to the actual polymerization step of the propylene polymer component(s).

In a particularly preferred embodiment of the present invention, the propylene polymer is prepared in the presence of such a modified catalyst to obtain said reactor made polypropylene polymer, preferably homopolymer. With such modified catalyst, it is also possible to carry out the above-identified preferred polymerization sequence for the preparation of in-situ blended multimodal, including bimodal, polypropylenes.

The polymeric nucleating agent introduced via in-reactor-nucleation is preferably present in the final product in an

amount of from at least 10 ppm, typically at least 13 ppm, (based on the weight of the polypropylene polymer). Preferably, this agent is present in the polypropylene polymer in a range of from 10 to 1000 ppm, more preferably from 15 to 500 ppm, such as 20 to 100 ppm. The polymeric nucleating agent may also be present in the final product also in lower concentrations, like in an amount of from at least 0.5 ppm, typically at least 1.0 ppm, (based on the weight of the polypropylene polymer). Preferably, this agent is present in the polypropylene polymer in a range of 2 to 100 ppm, more preferably from 3 to 80 ppm, such as 5 to 50 ppm.

In case of applying in-reactor nucleation, the inventive composition comprises a propylene polymer fraction received from a step of pre-polymerization which is carried out before the polymerization of the first fraction as defined above. More preferably, said fraction is a propylene homopolymer fraction.

Another embodiment, different to the above mentioned in-reactor blend, is a mechanical blend of a polymer with a nucleating agent, wherein the polymer is first produced in the absence of a nucleating agent and is then blended mechanically with the nucleating agent or with a small amount of nucleated polymer or with polymers, which already contain the nucleating agent (so-called master batch technology) in order to introduce the nucleating agent into the polymer mixture. The nucleating agent may preferably be added in a range of from 0.1 to 1.0 wt.%, based on the weight of the polymer mixture.

The preparation of a reactor made polymer composition ensures the preparation of a homogenous mixture of the components, for example a homogenously distributed nucleating agent in the polypropylene polymer. However, in the present invention in-reactor nucleation may also be combined with post-reactor nucleation.

According to a further preferred embodiment of the present invention, the multimodal polypropylene composition may comprise a relatively moderate amount of 20 to 35 % of lamella thicknesses within a range of 24.16 to 84.55 nm with respect to the whole lamella thickness range, as obtained by stepwise isothermal segregation technique (SIST), and still achieve excellent stiffness.

In a SIST measurement the melt enthalpy is recorded as function of temperature and evaluated through measuring the melt enthalpy of fractions melting within temperature intervals of 10 °C in the range from 50 to 200 °C. The melting curve of the polypropylene crystallized this way is used for calculating the lamella thickness distribution according to the Thomson-Gibbs equation. Details are given in the experimental part.

The polypropylene composition is preferably obtainable by a process as described in the following. The present invention is insofar concerned with polypropylene compositions obtainable by the process as described in the following.

The polymerization for obtaining the inventive polypropylene composition is effected in the presence of a catalyst system including a Ziegler Natta catalyst comprising

a) compounds (TC) of a transition metal of Group 4 to 6 of the IUPAC Periodic Table of Elements, a Group 2 metal compound (MC) and an internal donor (ID), wherein said internal donor (ID) is a non-phthalic compound,

b) a co-catalyst (Co),

c) optionally an external donor (ED), and

d) optionally a nucleating agent (NU).

Compound a) is a solid catalyst component which comprises an internal electron donor which is a compound having the structure according to formula (I) below:

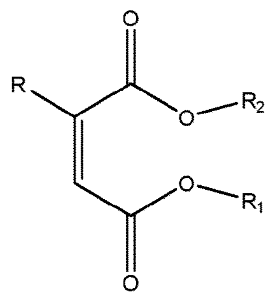

(I)

wherein $R_1$ and $R_2$; are the same or different being a linear or branched $C_1$-$C_{12}$-alkyl group and R is hydrogen or a linear, branched or cyclic $C_1$ to $C_{12}$-alkyl. Preferably $R_1$ and $R_2$ are a linear or branched $C_1$-$C_8$-alkyl group, more preferably a linear or branched C1-$C_4$-alkyl group and most preferably ethyl, whereby $R_1$ and $R_2$ are preferably the same.

R is preferably not hydrogen. Especially preferably R is a linear or branched $C_1$ to $C_3$-alkyl and in particular R is

methyl.

The internal donor (ID) is preferably selected from the group consisting of optionally substituted malonates, maleates, succinates, glutarates, benzoates and derivatives and/or mixtures thereof, preferably from citraconates. A derivative is a compound that is synthesized from a parent compound by replacement of one atom with another atom or group of atoms.

The catalyst used in the present invention is solid Ziegler-Natta catalyst, which comprises compounds of a transition metal of Group 4 to 6 of IUPAC, like titanium, a Group 2 metal compound, like magnesium and an internal donor (ID) being a non -phthalic compound, preferably a compound according to formula (I). Thus, the catalyst is free of undesired phthalic compounds.

Further, the solid catalyst is preferably free of any external support material, like silica or MgCl, but the catalyst is preferably self-supported.

The solid catalyst, preferably in particulate form is suitably obtainable by general procedures as described in WO 2017/148970 A1.

Detailed description of preparation of catalysts is also disclosed in WO-A-2012/007430, EP-A- 2610271, EP-A-261027 and EP-A-2610272.

The solid catalyst component is contacted with an organoaluminum compound and an external electron donor before or when using it in polymerisation. The organoaluminum compound is preferably an aluminum alkyl or aluminum alkyl halide compound. Accordingly the organoaluminum compound may be a trialkyl aluminum, like triethyl aluminum (TEAL), tri-isobutyl aluminum, trimethyl aluminum, tri-n-hexyl aluminum or trinoctyl aluminum. It may further be alkyl aluminum chloride, such as dialkyl aluminum chloride or alkyl aluminum dichloride. Furthermore, the organoaluminum compound may be a mixture of two or more above-mentioned compounds. Especially preferably the organoaluminum compound is triethyl aluminum (TEAL).

As further preferably component of the catalyst system is an external donor (ED). The external donor is preferably a silane compound having the formula $Si(OR^{11})_nR^{10}_{4-n}$, wherein each $R^{11}$ is independently a linear or branched $C_1$-$C_4$ alkyl, preferably methyl or ethyl; and each $R^{10}$ is independently a linear or branched alkyl group having from 1 to 24 and optionally containing an atom of group 15 of periodic table of elements or comprises a cyclic group having from 6 to 12 carbon atoms. Preferably each $R^{10}$ is independently cyclohexyl, phenyl, methyl, ethyl, tert-butyl and a group having the formula $NR^{12}R^{13}$, wherein $R^{12}$ and $R^{13}$ are each independently a $C_1$-$C_{12}$-hydrocarbyl group, preferably methyl, ethyl, propyl or butyl group. Especially preferably the electron donor is selected from the group consisting of dicyclopentyldimethoxysilane, cyclohexylmethyldimethoxysilane, diphenyldimethoxysilane, di-tert-butyldimethoxysilane, and (diethylamino)triethoxysilane. Even more preferably, the external donor (ED) is dicyclopentanedimethoxysilane (DCPDMS, donor D).

The molar ratio between the organoaluminum compound and the external donor (ED) is preferably within the range of from 5 to 80, more preferably from 6 to 60. These ranges refer to the total external donor fed into the reaction zones. A skilled person will understand that the feed of the external donor can be split over the reaction zones.

The polymerisation process is conducted by contacting the above-described polymerisation catalyst with propylene and hydrogen as well as optional comonomers.

The polymerisation may be conducted according to any method known in the art as slurry or gas phase polymerisation. Furthermore, the polymerisation may be conducted in multiple cascaded reactors, where, for instance, in one or more reactors is produced a semicrystalline matrix and in one or more reactors an elastomeric rubber phase dispersed in the matrix.

It is preferred that the polymerisation process comprises at least one polymerisation step where propylene is polymerised in slurry. Especially preferably the slurry polymerisation step is conducted in a loop reactor. While there may be other steps where the resulting polymer also has the $MFR_2$ in the desired range of from 100 to 10000 g/mol, it is preferred that the polymer of propylene produced in the slurry polymerisation step, more preferably in the loop reactor, has the $MFR_2$ in the desired range of from 100 to 10000 g/mol.

When the polymerisation is conducted in slurry, the temperature is typically from 50 to 100 °C, preferably from 60 to 90 °C. The pressure is typically from 1 to 100 bar, preferably from 10 to 80 bar and more preferably from 20 to 70 bar. The polymerisation may be conducted in any reactor known in the art, for instance, loop reactor and continuous stirred tank reactor.

In slurry polymerisation the polymer particles, including the active catalyst, are suspended in a fluid phase. The fluid phase may be a liquid phase or a so called supercritical phase where the temperature of the fluid is greater than the critical temperature thereof and the pressure of the fluid is greater than the critical pressure thereof. Preferably the fluid phase is a liquid phase.

The fluid phase comprises propylene monomer, eventual comonomer(s), hydrogen and eventual inert component(s). Preferably an inert component is not present or the amount of inert components is small, such as less than 40% by mole, based on the total amount of the fluid, preferably no more than 20% by mole or even no more than 10% by mole, based on the total amount of the fluid. It is especially preferred that the feed of inert components is at minimum, such as

what is needed to introduce the catalyst into the reactor and what comes in as impurities together with propylene and eventual comonomer.

In slurry polymerisation the average residence time of the polymer in the reactor is usually less than two hours, such as from 20 to 90 minutes, preferably from 30 to 70 minutes. The melt flow rate is controlled by adding hydrogen and typically the molar ratio of hydrogen to propylene in the fluid phase is from 0.05 to 40 mol/kmol, preferably from 0.1 to 40 mol/kmol. As the person skilled in the art knows, greater hydrogen to propylene ratio results in a greater melt flow rate of the polymer. Comonomer, such as ethylene, may be used in the polymerisation, if needed. Suitable comonomers are ethylene and alpha-olefins having from four to eight carbon atoms. Most preferred comonomers are ethylene, 1 -butene and 1 -hexene. The comonomer, if used, is added in such amount that desired comonomer content in the polymer is obtained. Certain comonomers may also have an effect on the molecular weight, and thus the melt flow rate, of the polymer. For instance, when using ethylene as the comonomer it may be necessary to increase the hydrogen to propylene ratio for reaching the desired melt flow rate.

Preferably, a comonomer is not present whereby the resulting polymer of propylene is a homopolymer of propylene.

The solid catalyst component, the organoaluminum compound and the external electron donor may be contacted with each other before their entry into the polymerisation reactor or they may be introduced as separate components. It is preferred to contact the catalyst components before introducing them into the reactor. One suitable method of contacting the catalyst components is first contacting the organoaluminum compound and the external electron donor, for instance at a temperature within the range of from 0 to 50 °C and thereafter contacting the mixture with the solid catalyst component at a temperature within the range of from 0 to 50 °C. Another method includes contacting all three components simultaneously at a temperature within the range of from 0 to 50 °C. The time needed for precontacting is typically from about 30 seconds to about one hour.

After the precontacting the catalyst components may be introduced to the polymerisation reactor. It is, however, possible and preferred to introduce the precontacted catalyst components into a prepolymerisation stage where the catalyst is contacted with propylene at a temperature of from about -10 to 50 °C to polymerise a small amount of propylene onto the catalyst. Typically the amount of propylene polymerised in the prepolymerisation stage is from 50 to 1000 grams of polymer per one gram of catalyst. It is also possible to introduce the catalyst components separately into the prepolymerisation stage as described above, without precontacting. From the prepolymerisation stage the prepolymerised catalyst is passed to the polymerisation reactor where the polymerisation is conducted as described above.

When the polymerisation is conducted in gas phase, the temperature is typically from 50 to 100 °C, preferably from 60 to 90 °C. The pressure is typically from 1 to 60 bar, preferably from 3 to 50 bar and more preferably from 5 to 30 bar. The polymerisation may be conducted in any reactor known in the art, for instance, fluidised bed reactor, stirred bed reactor, settled bed reactor or fast fluidised bed reactor. If the polymerisation is conducted in gas phase it is then preferred to conduct the process in a fluidised bed reactor.

In gas phase polymerisation the average residence time of the polymer in the reactor is usually from one to five hours, preferably from 1.5 to 4 hours. The melt flow rate is controlled by adding hydrogen and the molar ratio of hydrogen to propylene may range from 0.05 to 400 mol/kmol, more preferably from 0.1 to 300 mol/kmol.

Comonomer may be used in the polymerisation, as described above for slurry polymerisation. Suitable comonomers are ethylene and alpha-olefins having from four to eight carbon atoms. Most preferred comonomers are ethylene, 1 -butene and 1 -hexene. The comonomer, if used, is added in such amount that desired comonomer content in the polymer is obtained. Certain comonomers may also have an effect on the molecular weight, and thus the melt flow rate, of the polymer. For instance, when using ethylene as the comonomer it may be necessary to increase the hydrogen to propylene ratio for reaching the desired melt flow rate. Preferably, a comonomer is not present whereby the polymer of propylene is a homopolymer of propylene.

Before introducing the polymerisation catalyst into the polymerisation reactor they may be precontacted as described above. Furthermore, the catalyst may be prepolymerised, as described above. In addition to the polymerisation step for producing the polymer of propylene having the required melt flow rate, the polymerisation process may comprise additional steps for producing other types of polymers. These may be further slurry or gas phase polymerisation steps. The further polymerisation steps may precede or succeed the polymerisation step where the propylene polymer having the required melt flow rate is produced. In an especially preferred embodiment the additional step or additional steps are conducted for producing elastomeric polymer, such as elastomeric copolymer of propylene and ethylene. In such a case the additional polymerisation step or additional polymerisation steps succeed the polymerisation step for producing the polymer of propylene having the melt flow rate according to claim 1.

In each polymerisation reactor the composition of the reactor contents can be analyzed according to the methods known in the art. Such methods usually include steps of taking gas or liquid samples from the reactor contents and passing the sample to an analyzer, such as one or more on-line gas chromatographs or infrared analysis equipment, respectively. Suitable equipment is available, among others, from Siemens, Emerson, AMA Instruments and ABB.

A preferred multistage process is a 'loop-gas phase' -process, such as developed by Borealis A S, Denmark

(known as BORSTAR® technology) described e.g. in patent literature, such as in EP-A-887379, WO-A-92/12182 WO-A-2004/000899, WO-A-2004/1 1 1095, WO-A-99/24478, WO-A-99/24479 or in WO-A-00/68315.

A further suitable slurry-gas phase process is the Spheripol® process of Basell as described for example in chapter 6 of Nello Pasquini (Ed.), Polypropylene Handbook, 2nd ed., Hanser Publishers, Munich (2005).

## Experimental part

### Measurement methods

#### a) Molecular weight distribution from gel permeation chromatography (GPC)

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 × TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards (the Mark-Houwink constant K: 9.54*10-5 and a: 0.725 for PS, and K: 1.91*10-4 and a: 0.725 for PP). All samples were prepared by dissolving 5 - 10 mg of polymer in 10 mL (at 160 °C) of stabilized TCB (same as mobile phase) and keeping for 3 hours with continuous shaking prior sampling in into the GPC instrument. The ratio of Mw and Mn is a measure of the broadness of the distribution, since each is influenced by the opposite end of the "population".

#### b) Melt Flow Rate

The melt flow rate is measured as the $MFR_2$ in accordance with ISO 1133 (230°C, 2.16 kg load) for polypropylene and is indicated in g/10 min. The MFR is an indication of the flowability, and hence the processability, of the polymer. The higher the melt flow rate, the lower the viscosity of the polymer.

#### c) Xylene soluble fraction

The xylene soluble fraction (XS) as defined and described in the present invention is determined as follows: 2.0 g of the polymer are dissolved in 250 ml p-xylene at 135 °C under agitation. After 30 minutes, the solution was allowed to cool for 15 minutes at ambient temperature and then allowed to settle for 30 minutes at 25 ± 0.5 °C. The solution was filtered with filter paper into two 100 ml flasks. The solution from the first 100 ml vessel was evaporated in nitrogen flow and the residue dried under vacuum at 90 °C until constant weight is reached. The xylene soluble fraction (wt%) can then be determined as follows:

$$XS = (100 \times m1 \times V0) / (m0 \times V1),$$

wherein m0 designates the initial polymer amount (g), m1 defines the weight of residue (g), V0 defines the initial volume (ml) and V1 defines the volume of the analyzed sample (ml).

#### d) Differential Scanning Calorimetry (DSC)

The melting temperature Tm, crystallisation temperature Tc and melting enthalpy Hm are measured with a Mettler TA820 differential scanning calorimetry device (DSC) on 3 ± 0.5 mg samples in accordance with ISO 11357-3:1999. Crystallisation and melting temperatures are obtained during 10 °C/min cooling and heating scans between -30 °C and 225 °C. Melting and crystallisation temperatures were taken as the peaks of the endotherms and exotherms.

#### e) Stepwise Isothermal Segregation Technique (SIST)

The isothermal crystallisation for SIST analysis was performed in a Mettler TA 820 DSC on 3±0.5 mg samples at decreasing temperatures between 200°C and 105°C.

(i) the samples were melted at 225 °C for 5 min.,
(ii) then cooled with 80 °C/min to 145 °C
(iii) held for 2 hours at 145 °C,
(iv) then cooled with 80 °C/min to 135 °C
(v) held for 2 hours at 135 °C,
(vi) then cooled with 80 °C/min to 125 °C
(vii) held for 2 hours at 125 °C,
(viii) then cooled with 80 °C/min to 115 °C
(ix) held for 2 hours at 115 °C,
(x) then cooled with 80 °C/min to 105 °C
(xi) held for 2 hours at 105 °C.

After the last step the sample was cooled down with 80 °C/min to -10 °C and the melting curve was obtained by heating the cooled sample at a heating rate of 10°C/min up to 200°C. All measurements were performed in a nitrogen atmosphere. The melt enthalpy is recorded as function of temperature and evaluated through measuring the melt enthalpy of fractions melting within temperature intervals of 10 °C in the range from 50 to 200 °C.

The melting curve of the material crystallised this way can be used for calculating the lamella thickness distribution according to Thomson-Gibbs equation.

$$T_m = T_0\left(1 - \frac{2\sigma}{\Delta H_0 \cdot L}\right)$$

where $T_0$=457K, $\Delta H_0$ =134x106 J/m$^3$, $\sigma$ =0,049.6 J/m$^2$ and L is the lamella thickness in nm. An inversion of this formula results in

$$L = 0.74\,.\,457\ /\ (457 - T_m)\ nm$$

The amount of a certain lamella thickness range is obtained by relating the relative enthalpy integral of said fraction to the total enthalpy. Further details of the method can be found in the following two references incorporated by reference herewith:

J.A. Parker, D.C. Bassett, R.H. Olley, P. Jaaskelainen; On high pressure crystallization and the characterization of linear low-density polyethylenes;

A.Wlochowicz, M. Eder; Distribution of lamella thicknesses in isothermally crystallized polypropylene and polyethylene by differential scanning calorimetry; Polymer 1984, 25 (9), 1268-1270.

**f) Quantification of microstructure by NMR spectroscopy**

Quantitative nuclear-magnetic resonance (NMR) spectroscopy was used to quantify the isotacticity and regio-regularity of the propylene polymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$, respectively. All spectra were recorded using a $^{13}C$ optimised 10 mm extended temperature probehead at 125°C using nitrogen gas for all pneumatics.

For propylene homopolymers approximately 200 mg of material was dissolved in 1,2-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V. et al., Macromolecules 30 (1997) 6251). Standard single-pulse excitation was employed utilising the NOE and bilevel WALTZ16 decoupling scheme (Zhou, Z. et al., J. Mag. Reson. 187 (2007) 225; Busico, V. et al., Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs. For propylene homopolymers all chemical shifts are internally referenced to the methyl isotactic pentad (mmmm) at 21.85 ppm. Characteristic signals corresponding to regio defects (Resconi, L., et al., Chem. Rev. 2000, 100, 1253; Wang, W-J., Zhu, S., Macromolecules 33 (2000), 1157; Cheng, H. N., Macromolecules 17 (1984), 1950) or comonomer were observed. The tacticity distribution was quantified through

integration of the methyl region between 23.6-19.7 ppm correcting for any sites not related to the stereo sequences of interest (Busico, V., Cipullo, R., Prog. Polym. Sci. 26 (2001) 443; Busico, V., et al., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\ \% = 100 * (mmmm\ /\ sum\ of\ all\ pentads)$$

)

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., et al., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8})\ /\ 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e]\ mol.\text{-}\% = 100 * (P_{21e}\ /\ P_{total})$$

**g) Flexural modulus**

Flexural modulus was determined in a 3-point-bending according to ISO 178 on injection molded specimens of 80 × 10 × 4 mm, prepared at 200 °C or 230°C in accordance with EN ISO 19069-2.

**h) Analytical Temperature Rising Elution Fractionation (a-TREF)**

The chemical composition distribution was determined by analytical Temperature Rising Elution Fractionation (aTREF) as described by Soares, J.B.P., Fractionation, In: Encyclopedia Of Polymer Science and Technology, John Wiley & Sons, New York, pp. 75-131, Vol. 10, 2001**.** The separation of the polymer in TREF is according to their crystallinity in solution. The TREF profiles were generated using a CRYSTAF-TREF 200+ instrument manufactured by PolymerChar S.A. (Valencia, Spain).

The polymer sample was dissolved in 1,2,4-trichlorobenzene (TCB, stabilized with 250 mg/l 2,6-di tert. butyl-4-methyl-phenol) at a concentration between 1.5 and 2.0 mg/ml at 150 °C for 180 min and 1.8 ml of the sample solution was injected into the column (8 mm inner diameter, 15 cm length, filled with inert support e.g. glass beads). The column oven was then rapidly cooled to 110 °C and held at 110 °C for 30 min for stabilization purpose and it was later slowly cooled to 35°C under a constant cooling rate (0.1 °C/min). The polymer was subsequently eluted from the column with 1,2,4-trichlorobenzene (stabilized with 250 mg/l 2,6-di tert. butyl-4-methyl-phenol) at a flow rate of 0,5 ml/min at 35 °C for a period of 10 min followed by a temperature increase from 35 °C to 135 °C at a constant heating rate of 0.5 °C/min with a flow rate of 0,5ml/min. The concentration of the polymer during elution was recorded by an infrared detector (measuring the C-H absorption at 3.5 micrometer wavelength). The detector response was plotted as a function of the temperature. The

normalized concentration plot was presented as fractogram together with the cumulative concentration signal normalized to 100.

The high crystalline fraction (HCF) is the amount in wt.% of the polymer fraction with will elute between 90 °C and 110 °C elution temperature, which mainly contains the homo-polyethylene chains or chains with a very low branching content. The low crystalline fraction (LCF) is than the amount in wt.% of the polymer fraction with elutes between 35 and 90 °C.

**i) Charpy notched impact strength**

Charpy notched impact strength was determined according to ISO 179 1eA at +23 °C using injection molded specimens molded of 80 × 10 × 4 mm prepared at 200 °C or 230°C, produced according to EN ISO 19069-2.

**Experiments**

Inventive polypropylene compositions IE1 and IE2 have been produced in a Borstar™ pilot plant using one liquid-phase loop reactor and two gas phase reactors under conditions as shown in Table 1. The first reaction zone was a loop reactor and the second and third reaction zones were gas phase reactors. The catalyst system was a vinylcyclohexyl (VCH)-modified emulsion-type Ziegler-Natta catalyst, prepared according to WO 2017/148970 A1. in combination with a triethylaluminum (TEA) cocatalyst and dicyclopentyl dimethoxysilane (donor D) as an external donor at a ratio TEA/-propylene of 0.2 g/kg and TEA/donor ratios as indicated in Table 1 below. The alpha-nucleating agent poly(vinyl cyclohexane) (PVCH), was incorporated by using the BNT technology described above.

Data summarizing the polymerization of the inventive examples IE1 to IE6 and comparative examples CE3 and CE4 are shown in Table 1 below. CE1 and CE2 are commercial materials, therefore not included in this table.

**Table 1**

| | | | CE3 | CE4 | IE1 | IE2 | IE3 | IE4 | IE5 | IE6 |
|---|---|---|---|---|---|---|---|---|---|---|
| prepoly | Donor type | | D | U | D | D | D | D | D | D |
| | TEAl | g/tC3 | 200 | | 170.0 | 170.0 | 200.0 | 200.0 | 200.0 | 200.0 |
| | Donor feed | g/tC3 | 60 | | 40.0 | 40.0 | 60.0 | 60.0 | 60.0 | 60.0 |
| | Al/donor ratio | mol/mol | 47 | 9.0 | 55.0 | 55.0 | 7.0 | 7.0 | 7.0 | 7.0 |
| | Temperature | °C | 30 | | 30.0 | 30.0 | 30.0 | 30.0 | 30.0 | 30.0 |
| loop | Temperature | °C | | | 70 | 70 | 85 | 85 | 85 | 85 |
| | pressure | bar | | | 55 | 55 | 53 | 53 | 53 | 53 |
| | MFR2 | (g/10 min) | 1.71 | 427.0 | 376.0 | 373.0 | 263.0 | 0.1 | 0.1 | 0.1 |
| | H2/C3 | mol/kmol | 0.18 | | 35.8 | 35.7 | 19.2 | 0.1 | 0.1 | 0.1 |
| | XCS | wt.-% | 2.9 | 2.1 | n.d. | 3.3 | 2.4 | 2.6 | 2.2 | 2.3 |
| | Split | wt.-% | 52.47 | 52.0 | 53.9 | 59.3 | 50.8 | 48.8 | 50.8 | 53.3 |
| | amount made in loop | wt.-% | | 44.0 | 44.1 | 50.2 | 47.4 | 35.0 | 35.1 | 40.0 |
| GPR1 | Temperature | °C | | | 80 | 80 | 85 | 85 | 85 | 85 |
| | pressure | bar | | | 23 | 23 | 24 | 24 | 24 | 24 |
| | MFR2 | (g/10 min) | 1.74 | 260.0 | 350.0 | 356.0 | 3.4 | 2.8 | 2.7 | 2.2 |
| | H2/C3 | mol/kmol | 3.07 | | 40.0 | 40.0 | 0.2 | 192.2 | 211.7 | 203.5 |
| | XCS | wt.-% | 2.4 | 2.1 | n.d. | 2.5 | 2.0 | 1.7 | 1.9 | 1.9 |
| | MFR2 made in GPR1 | (g/10 min) | | 152.0 | 318.0 | 333.0 | 0.05 | 109.0 | 150.3 | 96.2 |
| | Split | wt.-% | 47.53 | 48.0 | 46.2 | 40.7 | 49.2 | 51.2 | 49.2 | 46.7 |
| | amount made in GPR1 | wt-% | | 40.0 | 37.8 | 34.5 | 45.9 | 36.7 | 33.9 | 35.1 |
| GPR2 | Temperature | °C | | | 90 | 90 | 85 | 70 | 85 | 85 |
| | pressure | bar | | | 21 | 21 | 21 | 21 | 21 | 21 |
| | XCS | wt.-% | - | 1.9 | 2.0 | 3.0 | 2.2 | 1.8 | 2.0 | 2.2 |
| | H2/C3 | mol/kmol | - | | | | 0.0 | 203.2 | 9.9 | 1.9 |
| | MFR2 made in GPR2 | (g/10 min) | - | 7.0 | 14.0 | 16.0 | 3.5 | 7.9 | 2.4 | 1.0 |

| | | | CE3 | CE4 | IE1 | IE2 | IE3 | IE4 | IE5 | IE6 |
|---|---|---|---|---|---|---|---|---|---|---|
| | amount made in GPR2 | wt.-% | - | 15.0 | 18.1 | 15.3 | 6.7 | 28.3 | 31.0 | 24.9 |
| final | PP XCS | wt.-% | 2.6 | 2 | 2.9 | 2.7 | 2.2 | 1.8 | 2 | 2.2 |
| | PP Pellet MFR2 | (g/10 min) | 1.6 | 150 | 210 | 226 | 3.4 | 3.8 | 2.6 | 1.8 |
| | | | | | | | | | | |

Properties of the materials are shown in Table 2 below.

**Table 2**

| | | | CE1 | CE2 | CE3 | CE4 | IE1 | IE2 | IE3 | IE4 | IE5 | IE6 |
|---|---|---|---|---|---|---|---|---|---|---|---|---|
| | PELLET MFR2 (230 °C) | g/10 min | 20 | 125 | 1.6 | 150 | 210 | 226 | 3.4 | 3.8 | 2.6 | 1.8 |
| | MELTING TEMPERATURE Tm1 | °C | 167 | 161 | 164 | 167 | | | 167 | 166 | 167 | 166 |
| | MELT ENTHALPY HoF1 | J/g | 119 | 112 | 113 | 104 | | | 121 | 120 | 118 | 122 |
| | CRYST. TEMP. Tcr | °C | 131 | 113 | 126 | 127 | | | 128 | 129 | 128 | 129 |
| | WEIGHT AV. MOLAR MASS Mw | kg/mol | 230 | 180 | 374.5 | | 96.2 | 95.1 | 413 | 369.5 | 406 | 438.5 |
| | POLYDISPERSITY INDEX Mw/Mn | - | 4.8 | 5 | 5.3 | | 6.8 | 7.6 | 12.5 | 10.1 | 9.8 | 10.4 |
| | pentad isotacticity (NMR) | % | 98 | 95 | 94.9 | 98.5 | 97.8 | 97.3 | 97.61 | 97.32 | 97.21 | 97.45 |
| | aTREF - amount eluting between 90-110°C | % | 11.1 | 12.9 | | n.d. | 11 | 12.4 | - | - | - | - |
| | aTREF - amount eluting between 110-115°C | % | 11.1 | 16.5 | | n.d. | 15.7 | 16.9 | - | - | - | - |
| | aTREF - amount eluting between 115-120°C | % | 20.3 | 30.9 | | n.d. | 28 | 31.5 | - | - | - | - |
| | aTREF - amount eluting between 120-129°C | % | 59.9 | 35.5 | | n.d. | 41.2 | 24.7 | - | - | - | - |

CE1 and CE2 are commercial materials and are described in EP 2 514 770 A1. CE4 is inventive example 3 (IE3) also described in EP 2 514 770 A1.

Prior to conversion and mechanical testing, the materials were stabilized and additionally nucleated. The polymer compositions were already nucleated according to the in-reactor technology described above. Where indicated, nucleating agents were additionally supplied externally post-reactor (to the extruder). Properties of the nucleated compositions are shown in Table 5 below.

Table 3 below gives a short description of the additives used in the preparation of the materials.

**Table 3**

| | | | |
|---|---|---|---|
| AA120PWD Veg (AA1) | Antistatic agent | Glycerol esters | Dimodan HP FF from Danisco/Dupont |
| AO501GRA (AO1) | Antioxidant | Blend of Phenolic AO and phosphite | Irganox B215 (FF) from BASF |
| AA130PEL (AA2) | Antistatic agent | Glycerol ester | Dimodan ML 90-1 from Danisco/-Dupont |
| AS400 (AS1) | Acid scavenger | Synthetic hydrotalcite | ADK STAB HT from Adeka Palmerole |
| AS100GRA VEG (AS2) | Acid scavenger | Calcium stearate | Ceasit SW Veg from Baerlocher |
| FS042 (AO2) | Antioxidant | Alkyl radical scavenger | Irgastab FS 042 from BASF |
| NA11 (NU1) | Nucleating agent | Phosphorous based NU | ADK STAB NA-11 UH from Adeka Corporation |

(continued)

| | | | |
|---|---|---|---|
| AA120PWD Veg (AA1) | Antistatic agent | Glycerol esters | Dimodan HP FF from Danisco/Dupont |
| NaBez (NU2) | Nucleating agent | Sodium benzoate | Irgastab NA 04 from BASF |
| Jetfine 07CA (Ta1) | Talcum | | Jetfine 07CA from Imerys |
| TALK 3.1 (Ta2) | talcum | | Talco HM2 |

Talco HM2 manufactured by IMI-Fabi (Italy) having a median particle size d50 of 2.4 μm, a cutoff particle size d95 of 7.7 μm and a specific surface of 21 $m^2$/g.
Jetfine 0.7 CA is a very fine and white talcum type with ultra lamellarity and ultrafine grind from Imerys, France. It has a median particle diameter determined by laser diffraction, Mie Theory (ISO 13320-11) of 2.5μm and a d95 of 5.2 μm.

Table 4 below gives information on additives and additional nucleation for the inventive and comparative examples.

**Table 4**

| | | **CE3-NU** | **CE4-NU** | **IE1-NU** | **IE2-NU** | **IE3-NU1** | **IE3-NU2** | **IE3-NU3** | **IE3-NU4** | **IE4-NU1** | **IE5-NU1** | **IE6-NU1** |
|---|---|---|---|---|---|---|---|---|---|---|---|---|
| Base material | wt.-% | 99.5 (CE3) | 99.75 (CE4) | 97.5 (IE1) | 97.5 (IE2) | 99.35 (IE3) | 98.95 (IE3) | 98.35 (IE3) | 98.75 (IE3) | 99.35 (IE4) | 99.35 (IE5) | 99.35 (IE6) |
| AO1 | wt% | 0.15 | 0.2 | 0.15 | 0.15 | 0.15 | 0.15 | 0.15 | 0.15 | 0.15 | 0.15 | 0.15 |
| AA1 | wt% | | | 0.33 | 0.33 | | | | | | | |
| AA2 | wt% | | | 0.07 | 0.07 | | | | | | | |
| AS1 | wt% | 0.05 | | | | 0.05 | 0.05 | 0.05 | 0.05 | 0.05 | 0.05 | 0.05 |
| AS2 | wt% | | 0.05 | 0.05 | 0.05 | | | | | | | |
| AO2 | wt% | 0.05 | | | | 0.05 | 0.05 | 0.05 | 0.05 | 0.05 | 0.05 | 0.05 |
| NU1 | wt% | 0.4 | | | | 0.4 | 0.4 | 0.4 | | 0.4 | 0.4 | 0.4 |
| NU2 | wt% | | | | | | 0.4 | | | | | |
| Ta1 | wt% | | | | | | | 1 | 1 | | | |
| Ta2 | wt% | | | 1.9 | 1.9 | | | | | | | |

Properties of the nucleated materials are summarized in Table 5a and 5b below:

**Table 5a**

| **Material** | | **CE1-NU** | **CE2** | **CE3-NU** | **CE4-NU** | **IE1-NU** | **IE2-NU** | **IE3-NU1** | **IE3-NU2** | **IE3-NU3** | **IE3-NU4** | **IE4-NU1** |
|---|---|---|---|---|---|---|---|---|---|---|---|---|
| MFR | g/10min | 20 | 125 | 1.6 | 150 | 210 | 226 | 3 | 3.5 | 3.3 | 3.7 | 4.4 |
| Cryst. temperature | °C | 131 | 113 | 130 | 127 | 128 | 129 | 132 | 134 | 134 | 129 | 133 |
| melting temperature | °C | 167 | 161 | 164 | 167 | 165 | 164.7 | 167 | 167 | 167 | 166 | 167 |
| melting enthalpy | J/g | 119 | 112 | 116 | 104 | 125 | 124 | 121 | 125 | 125 | 120 | 121 |
| glass transition temperature | °C | - | - | 0.6 | - | - | - | -0.4 | -0.7 | 0 | -0.8 | -0.4 |

(continued)

| Material | | CE1-NU | CE2 | CE3-NU | CE4-NU | IE1-NU | IE2-NU | IE3-NU1 | IE3-NU2 | IE3-NU3 | IE3-NU4 | IE4-NU1 |
|---|---|---|---|---|---|---|---|---|---|---|---|---|
| storage modulus @23 °C | MPa | - | - | 950 | - | - | - | 1180 | 1144 | 1193 | 1233 | 1105 |
| NIS @23 °C | | | | 3.13 | | 1 | 1 | 1.91 | 2.28 | 2.25 | 2.57 | 1.88 |
| heat deflection temperature (B) | °C | 114 | 90 | | 118 | 116 | 116 | - | - | - | - | - |
| Flexural Modulus* | MPa | 2108 | - | 1977 | - | 2176 | 2135 | 2388 | 2434 | 2481 | 2292 | 2335 |
| Flexural Strength | % | 56 | - | 45 | - | 51.4 | 51 | 53 | 54 | 54 | 51 | 52 |
| Tensile Modulus* | MPa | 2200 | 1600 | | 2270 | 2293 | 2256 | - | - | - | - | - |
| Tensile Strength | MPa | 42 | 36 | | 39 | 34.2 | 24.9 | - | - | - | - | - |
| Tensile strain at break | % | 12 | 11 | | 3 | 2.05 | 2.2 | - | - | - | - | - |
| SIST (lamellae thickness of 24.16-84.55 nm) | % | 38 | 2.5 | | 48 | 28 | 29 | - | - | - | - | - |
| * specimen of materials with a MFR < 7 were injection moulded at 230°C, those for materials with MFR > 7 at 200 °C. | | | | | | | | | | | | |

**Table 5b**

| Name | IE5- NU1 | IE6-NU1 |
|---|---|---|
| MFR | 2.7 | 1.9 |
| Cryst. temperature | 133 | 132 |
| melting temperature | 167 | 167 |
| melting enthalpy | 125 | 121 |
| glass transition temperature | 0.7 | 0.1 |
| storage modulus @23 °C | 1130 | 1400 |
| NIS @23 °C | 2.13 | 2.27 |
| heat deflection temperature (B) | - | - |
| Flexural Modulus * | 2330 | 2301 |
| Flexural Strength | 52 | 51 |
| Tensile Modulus | - | - |
| Tensile Strength | - | - |
| Tensile strain at break | - | - |
| SIST (lamellae thickness of 24.16-84.55 nm) | - | - |
| * specimen of materials with a MFR < 7 were injection moulded at 230°C, those for materials with MFR > 7 at 200 °C. | | |

The above data impressively show that the propylene compositions of the present invention show an improved balance between high stiffness, high flowability and balanced mechanical performance including desired stiffness-impact balance.

The above results further show that the propylene compositions of the present invention show an improved balance between high stiffness, desired stiffness-impact balance and show low XCS values making the compositions suitable for medical and environmental applications.

## Claims

1. A multimodal polypropylene composition comprising:

   (A) a first propylene polymer fraction (PP1), and
   (B) a second propylene polymer fraction (PP2),
   wherein the first propylene polymer fraction (PP1) and the second propylene polymer fraction (PP2) have different weight average molecular weights, and
   the multimodal polypropylene composition has:

   (i) a melt flow rate $MFR_2$ (230°C, 2.16kg, ISO 1133) of from 1 to 500 g/10 min.,
   (ii) a molecular weight distribution (Mw/Mn), determined by gel permeation chromatography according to ISO 16014-1:2003 and ISO 16014-4:2003, of at least 6.0 and not more than 20.0,
   (iii) an isotacticity index (mmmm pentads) of at least 97 %, measured by $^{13}C$-NMR, as described herein,
   (iv) a xylene soluble fraction (XCS), determined according to ISO 16152; first edition, 2005-07-01 at 25 °C of less than 3.5 wt.%, and
   (v) an amount of 20 to 35 % of lamella thicknesses within a range of 24.16 to 84.55 nm with respect to the whole lamella thickness range, as obtained by stepwise isothermal segregation technique (SIST), as described herein and calculating the lamella thickness distribution according to the following equation:

$$T_m = T_0\left(1 - \frac{2\sigma}{\Delta H_0 \cdot L}\right)$$

   where $T_0$=457 K, $\Delta H_0$ =134×106 J/m$^3$, $\sigma$ =0,049.6 J/m$^2$ and L is the lamella thickness in nm.

2. The multimodal polypropylene composition according to claim 1, wherein the first propylene polymer fraction (PP1) and the second propylene polymer fraction (PP2) are homopolymers.

3. The multimodal polypropylene composition according to claim 1 or 2, wherein the first propylene polymer fraction (PP1) has a melt flow rate $MFR_2$ (230°C, 2.16kg, ISO 1133) of at least 350 g/10 min., and
   the second propylene polymer fraction (PP2) has a melt flow rate $MFR_2$ (230°C, 2.16kg, ISO 1133) lower than the melt flow rate of the first propylene polymer fraction (PP1).

4. The multimodal polypropylene composition according to any one of claims 1 to 3, wherein said composition has

   (i) a melt flow rate $MFR_2$ (230°C, 2.16kg, ISO 1133) of at least 100 g/10 min., and/or
   (ii) a flexural modulus, determined in a 3-point-bending according to ISO 178 on injection molded specimens of 80 × 10 × 4 mm, prepared at 200 °C or 230°C in accordance with EN ISO 19069-2, of at least 2000 MPa.

5. The multimodal polypropylene composition according to any one of the preceding claims, further having:
   (iii) an amount of at least 50 wt.% of the total polymer amount eluted by analytical temperature rising elution fractionation (aTREF), as determined herein, within a temperature range of from 115 to 129°C.

6. The multimodal polypropylene composition according to any one of the preceding claims having a crystallization temperature $T_{CR}$ of 125 °C or higher, measured by DSC and determined as described herein.

7. The multimodal polypropylene composition according to any one of the preceding claims having a Charpy notched impact strength of at least 1.6 kJ/m$^2$, determined according to ISO 179 1eA at +23 °C using injection molded

specimens molded at 230°C, produced according to EN ISO 19069-2 .

**8.** The multimodal polypropylene composition according to any one of the preceding claims, further comprising a third propylene polymer fraction (PP3) having a melt flow rate $MFR_2$ (230°C, 2.16kg, ISO 1133) which is lower than the melt flow rate $MFR_2$ (230°C, 2.16kg, ISO 1133) of the first propylene polymer fraction (PP1) and higher than the melt flow rate $MFR_2$ (230°C, 2.16kg, ISO 1133) of the second propylene polymer fraction (PP2).

**9.** The multimodal polypropylene composition according to any one of preceding claims, prepared in the presence of a Ziegler-Natta catalyst (ZN-C) comprising

a) compounds (TC) of a transition metal of Group 4 to 6 of the IUPAC Periodic Table of Elements, a Group 2 metal compound (MC) and an internal donor (ID), wherein said internal donor (ID) is a non-phthalic compound,
b) a co-catalyst (Co),
c) optionally an external donor (ED), and
d) optionally a nucleating agent.

**10.** The multimodal polypropylene composition according to claim 9, wherein the internal donor (ID) is selected from the group consisting of optionally substituted malonates, maleates, succinates, glutarates, benzoates and derivatives and/or mixtures thereof, preferably from citraconates.

**11.** A process for the production of a multimodal polypropylene composition according to any one of preceding claims, prepared in a multistage polymerization process in the presence of a Ziegler-Natta catalyst (ZN-C) comprising

a) compounds (TC) of a transition metal of Group 4 to 6 of the IUPAC Periodic Table of Elements, a Group 2 metal compound (MC) and an internal donor (ID), wherein said internal donor (ID) is a non-phthalic compound,
b) a co-catalyst (Co),
c) optionally an external donor (ED), and
d) optionally a nucleating agent.

**12.** The process according to claim 11, wherein the internal donor (ID) is selected from the group consisting of optionally substituted malonates, maleates, succinates, glutarates, benzoates and derivatives and/or mixtures thereof, preferably from citraconates.

**13.** The process according to claim 11 or 12, wherein the co-catalyst (Co), preferably triethyl aluminum is added in an amount of from 100 to 250 g/t of propylene monomer.

**14.** Use of a multimodal polypropylene composition according to any one of claims 1 to 10 for the production of molded articles, preferably injection molded articles or for the production of extruded articles.

**15.** Article comprising a multimodal polypropylene composition according any one of claims 1 to 10, preferably an automotive article or a glass fiber article.

**Patentansprüche**

**1.** Multimodale Polypropylen-Zusammensetzung, umfassend:

(A) eine erste Propylen-Polymer-Fraktion (PP1), und
(B) eine zweite Propylen-Polymer-Fraktion (PP2),
wobei die erste Propylen-Polymer-Fraktion (PP1) und die zweite Propylen-Polymer-Fraktion (PP2) verschiedene gewichtsgemittelte Molekulargewichte aufweisen, und
wobei die multimodale Polypropylen-Zusammensetzung aufweist:

(i) eine Schmelzflussrate $MFR_2$ (230 °C, 2,16 kg, ISO 1133) von 1 bis 500 g/10 min,
(ii) eine Molekulargewichtsverteilung (Mw/Mn), bestimmt durch eine Gelpermeationschromatographie gemäß ISO 16014-1:2003 und ISO 16014-4:2003, von wenigstens 6,0 und nicht mehr als 20,0,
(iii) einen Isotaktizitätsindex (mmmm Pentaden) von wenigstens 97%, gemessen durch $^{13}C$-NMR wie hier beschrieben,

(iv) eine Xylen-lösliche Fraktion (XCS), bestimmt gemäß ISO 16152, erste Ausgabe, 2005-07-01 bei 25 °C, von weniger als 3,5%, und
(v) einen Anteil von 20 bis 35 % von Lamella-Dicken in einem Bereich von 24,16 bis 84,55 nm in Bezug auf den gesamten Lamella-Dickenbereich, erhalten durch eine schrittweise isothermische Segregationstechnik (SIST) wie hier beschrieben und durch das Berechnen der Lamellen-Dickenverteilung gemäß der folgenden Gleichung:

$$T_m = T_0\left(1 - \frac{2\sigma}{\Delta H_0 \cdot L}\right)$$

wobei $T_0$ = 457 K, $\Delta H_0$ = 134 × 106 J/m$^3$, $\sigma$ = 0,049,6 J/m$^2$ und L die Lamella-Dicke in nm ist.

**2.** Multimodale Polypropylen-Zusammensetzung nach Anspruch 1, wobei die erste Propylen-Polymer-Fraktion (PP1) und die zweite Propylen-Polymer-Fraktion (PP2) Homopolymere sind.

**3.** Multimodale Polypropylen-Zusammensetzung nach Anspruch 1 oder 2, wobei die erste Propylen-Polymerfraktion (PP1) eine Schmelzflussrate $MFR_2$ (230 °C, 2,16 kg, ISO 1133) von wenigstens 350 g/10 min aufweist, und die zweite Propylen-Polymer-Fraktion (PP2) eine Schmelzflussrate $MFR_2$ (230 °C, 2,16 kg, ISO 1133) aufweist, die niedriger als die Schmelzflussrate der ersten Propylen-Polymer-Fraktion (PP1) ist.

**4.** Multimodale Polypropylen-Zusammensetzung nach einem der Ansprüche 1 bis 3, wobei die Zusammensetzung aufweist:

(i) eine Schmelzflussrate ($MFR_2$) (230 °C, 2,16 kg, ISO 1133) von wenigstens 100 g/10 min, und/oder
(ii) ein Biegemodul, bestimmt durch eine 3-Punkt-Biegung gemäß ISO 178 an spritzgegossenen Proben von 80 × 10 × 4 mm, vorbereitet bei 200 °C oder 230 °C gemäß EN ISO 19069-2, von wenigstens 2000 MPa.

**5.** Multimodale Polypropylen-Zusammensetzung nach einem der vorstehenden Ansprüche, die weiterhin umfasst:
(iii) einen Anteil von wenigstens 50 Gew.-% der gesamten Polymermenge, der durch eine analytische Elutionsfraktionierung bei steigender Temperatur (aTREF) eluiert ist, wie hier bestimmt, in einem Temperaturbereich von 115 bis 129 °C.

**6.** Multimodale Polypropylen-Zusammensetzung nach einem der vorstehenden Ansprüche, die eine Kristallisationstemperatur $T_{CR}$ von 125 °C oder höher, gemessen durch DSC und bestimmt wie hier beschrieben, aufweist.

**7.** Multimodale Polypropylen-Zusammensetzung nach einem der vorstehenden Ansprüche, die eine Charpy-Kerbschlagzähigkeit von wenigstens 1,6 kJ/m$^2$, bestimmt gemäß ISO 179 1eA bei +23 °C unter Verwendung von bei 230 °C spritzgegossenen Proben, die gemäß EN ISO 19069-2 erzeugt wurden, aufweist.

**8.** Multimodale Polypropylen-Zusammensetzung nach einem der vorstehenden Ansprüche, die weiterhin eine dritte Propylen-Polymer-Fraktion (PP3) mit einer Schmelzflussrate $MFR_2$ (230 °C, 2,16 kg, ISO 1133) aufweist, die niedriger als die Schmelzflussrate $MFR_2$ (230 °C, 2,16 kg, ISO 1133) der ersten Propylen-Polymer-Fraktion (PP1) und höher als die Schmelzflussrate $MFR_2$ (230 °C, 2,16 kg, ISO 1133) der zweiten Propylen-Polymer-Fraktion (PP2) ist.

**9.** Multimodale Polypropylen-Zusammensetzung nach einem der vorstehenden Ansprüche die in Anwesenheit eines Ziegler-Natta-Katalysators (ZN-C) vorbereitet wird, der umfasst:

a) Verbindungen (TC) eines Übergangsmetalls der Gruppe 4 bis 6 des IUPAC-Periodensystems der Elemente, einer Gruppe 2-Metallverbindung (MC) und eines internen Donors (ID), wobei der interne Donor (ID) eine nichtphthalische Verbindung ist,
b) einen Cokatalysator (Co),
c) optional einen externen Donor (ED), und
d) optional ein Nukleierungsmittel.

**10.** Multimodale Polypropylen-Zusammensetzung nach Anspruch 9, wobei der interne Donor (ID) aus der Gruppe, die

aus optional substituierten Malonaten, Maleaten, Succinaten, Glutaraten, Benzoaten und Derivaten und/oder Mischungen von diesen besteht, und vorzugsweise aus Citraconaten ausgewählt ist.

**11.** Verfahren zum Herstellen einer multimodalen Polypropylen-Zusammensetzung gemäß einem der vorstehenden Ansprüche, die in einem mehrstufigen Polymerisationsprozess in Anwesenheit eines Ziegler-Natta-Katalysators (ZN-C) vorbereitet wird, der umfasst:

a) Verbindungen (TC) eines Übergangsmetalls der Gruppe 4 bis 6 des IUPAC-Periodensystems der Elemente, einer Gruppe 2-Metallverbindung (MC) und eines internen Donors (ID), wobei der interne Donor (ID) eine nicht-phthalische Verbindung ist,
b) einen Cokatalysator (Co),
c) optional einen externen Donor (ED), und
d) optional ein Nukleierungsmittel.

**12.** Verfahren nach Anspruch 11, wobei der interne Donor (ID) aus der Gruppe, die aus optional substituierten Malonaten, Maleaten, Succinaten, Glutaraten, Benzoaten und Derivaten und/oder Mischungen von diesen besteht, und vorzugsweise aus Citraconaten ausgewählt ist.

**13.** Verfahren nach Anspruch 11 oder 12, wobei der Cokatalysator (Co), der vorzugsweise Triethylaluminium ist, mit einem Anteil von 100 bis 250 g/t eines Propylen-Monomers hinzugefügt wird.

**14.** Verwendung einer multimodalen Polypropylen-Zusammensetzung nach einem der Ansprüche 1 bis 10 für die Herstellung von gegossenen und vorzugsweise spritzgegossenen Artikeln oder für die Herstellung von extrudierten Artikeln.

**15.** Artikel, der eine multimodale Polypropylen-Zusammensetzung gemäß einem der Ansprüche 1 bis 10 umfasst und vorzugsweise ein Kfz-Artikel oder ein Glasfaserartikel ist.

## Revendications

**1.** Composition de polypropylène multimodale comprenant :

(A) une première fraction de polymère de propylène (PP1), et
(B) une deuxième fraction de polymère de propylène (PP2),
dans laquelle la première fraction de polymère de propylène (PP1) et la deuxième fraction de polymère de propylène (PP2) ont des masses moléculaires moyennes en poids différentes, et
la composition de polypropylène multimodale a :

(i) un indice de fluidité à chaud MFR2 (230 °C, 2,16 kg, ISO 1133) de 1 à 500 g/10 min,
(ii) une distribution de masse moléculaire (Mw/Mn), déterminée par chromatographie par perméation de gel conformément aux normes ISO 16014-1:2003 et ISO 16014-4:2003, d'au moins 6,0 et d'au plus 20,0,
(iii) un indice d'isotacticité (pentades mmmm) d'au moins 97 %, mesuré par RMN $^{13}C$ comme décrit dans le présent document,
(iv) une fraction soluble dans le xylène (XCS), déterminée selon la norme ISO 16152 ; première édition, 2005-07-01 à 25 °C, inférieure à 3,5 % en poids, et
(v) une quantité de 20 à 35 % d'épaisseurs de lamelles dans une plage allant de 24,16 à 84,55 nm par rapport à l'ensemble de la plage d'épaisseurs de lamelles, obtenue par la technique de ségrégation isotherme par étapes (SIST), telle que décrite dans le présent document, et en calculant la distribution des épaisseurs de lamelles selon l'équation suivante :

$$T_m = T_0\left(1 - \frac{2\sigma}{\Delta H_0 \cdot L}\right)$$

où $T_0$ = 457 K, $\Delta H_0$ = 134×$10^6$ J/$m^3$, $\sigma$ = 0.049,6 J/$m^2$ et L est l'épaisseur de la lamelle en nm.

**2.** Composition de polypropylène multimodale selon la revendication 1, dans laquelle la première fraction de polymère

de propylène (PP1) et la deuxième fraction de polymère de propylène (PP2) sont des homopolymères.

**3.** Composition de polypropylène multimodale selon la revendication 1 ou 2, dans laquelle la première fraction de polymère de propylène (PP1) a un indice de fluidité à chaud MFR2 (230 °C, 2,16 kg, ISO 1133) d'au moins 350 g/10 min, et
la deuxième fraction de polymère de propylène (PP2) a un indice de fluidité à chaud MFR2 (230 °C, 2,16 kg, ISO 1133) inférieur à l'indice de fluidité à chaud de la première fraction de polymère de propylène (PP1).

**4.** Composition de polypropylène multimodale selon l'une quelconque des revendications 1 à 3, dans laquelle ladite composition a

(i) un indice de fluidité à chaud MFR2 (230 °C, 2,16 kg, ISO 1133) d'au moins 100 g/10 min, et/ou
(ii) un module de flexion, déterminé lors d'une flexion en 3 points conformément à la norme ISO 178 sur des échantillons moulés par injection de 80 $\times$ 10 $\times$ 4 mm, préparés à 200°C ou 230 °C conformément à la norme EN ISO 19069-2, d'au moins 2 000 MPa.

**5.** Composition de polypropylène multimodale selon l'une quelconque des revendications précédentes, ayant en outre : (iii) une quantité d'au moins 50 % en poids de la quantité totale de polymère éluée par fractionnement par élution analytique avec élévation de température (aTREF), comme déterminée dans le présent document, dans une plage de température allant de 115 à 129 °C.

**6.** Composition de polypropylène multimodale selon l'une quelconque des revendications précédentes, ayant une température de cristallisation $T_{CR}$ de 125 °C ou plus, mesurée par DSC et déterminée comme décrit dans le présent document.

**7.** Composition de polypropylène multimodale selon l'une quelconque des revendications précédentes, ayant une résistance au choc sur éprouvette entaillée de Charpy d'au moins 1,6 kJ/$m^2$, déterminée selon la norme ISO 179 1eA à +23 °C à partir d'éprouvettes moulées par injection à 230 °C, produites selon la norme EN ISO 19069-2.

**8.** Composition de polypropylène multimodale selon l'une quelconque des revendications précédentes, comprenant en outre une troisième fraction de polymère de propylène (PP3) ayant un indice de fluidité à chaud MFR2 (230 °C, 2,16 kg, ISO 1133) inférieur à l'indice de fluidité à chaud MFR2 (230 °C, 2,16 kg, ISO 1133) de la première fraction de polymère de propylène (PP1) et supérieur à l'indice de fluidité à chaud MFR2 (230 °C, 2,16 kg, ISO 1133) de la deuxième fraction de polymère de propylène (PP2).

**9.** Composition de polypropylène multimodale selon l'une quelconque des revendications précédentes, préparée en présence d'un catalyseur Ziegler-Natta (ZN-C) comprenant

a) des composés (TC) d'un métal de transition des groupes 4 à 6 du tableau périodique des éléments de l'UICPA, un composé d'un métal du groupe 2 (MC) et un donneur interne (ID), ledit donneur interne (ID) étant un composé non phtalique,
b) un co-catalyseur (Co),
c) éventuellement un donneur externe (ED), et
d) éventuellement un agent de nucléation.

**10.** Composition de polypropylène multimodale selon la revendication 9, dans laquelle le donneur interne (ID) est choisi dans le groupe constitué par les malonates, maléates, succinates, glutarates, benzoates éventuellement substitués et leurs dérivés et/ou mélanges, de préférence parmi les citraconates.

**11.** Procédé de production d'une composition de polypropylène multimodale selon l'une quelconque des revendications précédentes, préparée dans un procédé de polymérisation en plusieurs étapes en présence d'un catalyseur Ziegler-Natta (ZN-C) comprenant

a) des composés (TC) d'un métal de transition des groupes 4 à 6 du tableau périodique des éléments de l'UICPA, un composé d'un métal du groupe 2 (MC) et un donneur interne (ID), ledit donneur interne (ID) étant un composé non phtalique,
b) un co-catalyseur (Co),
c) éventuellement un donneur externe (ED), et

d) éventuellement un agent de nucléation.

**12.** Procédé selon la revendication 11, dans lequel le donneur interne (ID) est choisi dans le groupe constitué par les malonates, maléates, succinates, glutarates, benzoates éventuellement substitués et leurs dérivés et/ou mélanges, de préférence parmi les citraconates.

**13.** Procédé selon la revendication 11 ou 12, dans lequel le co-catalyseur (Co), de préférence le triéthyl-aluminium, est ajouté en une quantité de 100 à 250 g/t de monomère propylène.

**14.** Utilisation d'une composition de polypropylène multimodale selon l'une quelconque des revendications 1 à 10 pour la production d'articles moulés, de préférence d'articles moulés par injection ou pour la production d'articles extrudés.

**15.** Article comprenant une composition de polypropylène multimodale selon l'une quelconque des revendications 1 à 10, de préférence article automobile ou article en fibre de verre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2514770 A1
- WO 2016102430 A1
- EP 2960279 A1
- EP 3184449 A1
- WO 2017148970 A1
- WO 2012007430 A
- EP 2610271 A
- EP 261027 A
- EP 2610272 A
- EP 887379 A
- WO 9212182 A
- WO 2004000899 A
- WO 2004111095 A
- WO 9924478 A
- WO 9924479 A
- WO 0068315 A


### Non-patent literature cited in the description


- **J.A. PARKER** ; **D.C. BASSETT** ; **R.H. OLLEY** ; **P. JAASKELAINEN**. *On high pressure crystallization and the characterization of linear low-density polyethylenes*
- **A.WLOCHOWICZ** ; **M. EDER**. Distribution of lamella thicknesses in isothermally crystallized polypropylene and polyethylene by differential scanning calorimetry. *Polymer*, 1984, vol. 25 (9), 1268-1270
- **BUSICO, V.** ; **CIPULLO, R.** *Prog. Polym. Sci.*, 2001, vol. 26, 443
- **BUSICO, V. et al.** *Macromolecules*, 1997, vol. 30, 6251
- **ZHOU, Z. et al.** *J. Mag. Reson.*, 2007, vol. 187, 225
- **BUSICO, V. et al.** *Rapid Commun.*, 2007, vol. 28, 11289
- **RESCONI, L. et al.** *Chem. Rev.*, 2000, vol. 100, 1253
- **WANG, W-J.** ; **ZHU, S.** *Macromolecules*, 2000, vol. 33, 1157
- **CHENG, H. N.** *Macromolecules*, 1984, vol. 17, 1950
- Fractionation. **SOARES, J.B.P.** Encyclopedia Of Polymer Science and Technology. John Wiley & Sons, 2001, vol. 10, 75-131